# EUROPÄISCHE PATENTSCHRIFT

(11) **EP 0 440 917 B1**
(45) Veröffentlichungstag und Bekanntmachung des Hinweises auf die Patenterteilung: **25.08.1993**
(21) Anmeldenummer: 90123403.9
(22) Anmeldetag: 06.12.1990
(51) Int. Cl.: F01D 25/16

(54) **Abgasturbolader-Lagerung**
Bearing arrangement for a turbocharger
Arrangement de palier pour une turbosoufflante

(30) Priorität: 30.01.1990 DE 4002583
(43) Veröffentlichungstag der Anmeldung: 14.08.1991
(73) Patentinhaber: A.G. Kühnle, Kopp & Kausch, D-67227 Frankenthal (DE)
(72) Erfinder: Münkel, Uwe, D-6710 Frankenthal 6 (DE); Dücker, Thomas, D-6712 Bobenheim-Roxheim (DE); Oberholz, Gerhard, D-6713 Freinsheim (DE)
(74) Vertreter: Klose, Hans, Dipl.-Phys.

(56) Entgegenhaltungen:
- EP-A- 0 286 883
- CA-A- 718 715

## Beschreibung

Die Erfindung bezieht sich auf eine Abgasturbolader-Lagerung mit einer Hülse, gemäß den im Oberbegriff des Patentanspruchs 1 angegebenen Merkmalen.

Eine derartige Abgasturbolader-Lagerung ist aus der DE 37 12 444 A1 bekannt. Zur Drehsicherung der Hülse ist ein Federelement vorgesehen, welches mit einem ersten Ende in eine axiale Nut der Hülse eingreift. Das Lagergehäuse enthält eine bevorzugt in radialer Richtung zur Welle sich öffnende Ausnehmung, in welche das andere Ende des Federelements eingreift. Zwischen dem ersten Ende des Federelements und der Nut ist praktisch nur eine Linienauflage vorhanden, aufgrund welcher vergleichsweise hohe Flächenpressungen auftreten und ggfs. Beschädigungen der Hülse eintreten können. Das Federelement ist im wesentlichen in einer Radialebene bezüglich der Welle angeordnet, während die genannten beiden Enden axial jeweils um etwa 90° abgewinkelt sind. Insbesondere im Bereich der Abwinkelungen ist eine besondere Gefährdung hinsichtlich eines Bruches festzustellen. Es ist nämlich mit hochfrequenten Schwingungen des Federelements zu rechnen, wobei Schwierigkeiten im Hinblick auf das Schwingungsverhalten ebenso wie auf die Funktionssicherheit und Lebensdauer für Drehzahlen über 150 000 U/min zu beachten sind. Derart hohe Drehzahlen werden insbesondere für sogenannte kleine Abgasturbolader gefordert, welche für Motoren bis etwa 1,5 Liter, maximal bis 2 l, zum Einsatz gelangen. Die Wellen derartiger Abgasturbolader sind im Hinblick auf Reibungsverluste bei hohen Drehzahlen extrem dünn und damit biegeweich ausgebildet. Weitere Schwierigkeiten ergeben sich bei derartigen schnelldrehenden Abgasturboladern durch einen als "Oil whip" bezeichneten Effekt, welcher in Drehzahlbereichen größer als der zweifache Wert der ersten oder zweiten kritischen Drehzahl auftreten kann. Dieser Effekt bewirkt eine Anregung der Welle in dem Sinne, daß die Wellenenden eine der Wellenrotation überlagerte zweite Drehbewegung um die geometrische Achse durchführen. Der zwischen den beiden axial beabstandet angeordneten Lagerflächen der Lagerbuchsen befindliche Wellenteil wird in die entgegengesetzte Richtung ausgelenkt, und man spricht daher vom sogenannten Seilschlageffekt. Wenn die überlagerte Drehbewegung mit der halben Wellendrehzahl erfolgt, kann ein metallischer Kontakt zwischen der Welle und der Lagerbuchse eintreten, woraus der vollständige Verlust der Lagertragfähigkeit und die Zerstörung der Lagerung resultieren können. Die auftretende Verformung der Welle kann zu einer unzulässigen Kantenpressung an den Enden der Hülse mit den Lagerbuchsen führen. Schwimmende Lagerbuchsen können jeweils unabhängig voneinander leichte Radial- und Kippbewegungen ausführen.

Ferner ist aus der CA-PS 718 715 ein Abgasturbolader bekannt, dessen Lagerhülse an einem axialen Ende Zähne aufweist. Mit dem Lagergehäuse ist eine Druckscheibe mit Zähnen verbunden, welche in die genannten Zähne der Lagerhülse zur Drehsicherung eingreifen. Die freie Bewegbarkeit der Lagerhülse ist auch in anderen Freiheitsgraden zumindest eingeschränkt. So werden die beiden anderen rotatorischen Freiheitsgrade, und zwar um die zur Längsachse senkrechten Raumachsen ebenso wie die translatorischen Freiheitsgrade in Richtung der Längsachse nicht unwesentlich eingeschränkt. An den Berührungsflächen der genannten Zähne der Lagerhülse sowie der Druckscheibe ist eine hohe Flächenpressung unvermeidlich. Infolge von Reibkorrosion besteht die Gefahr von Zerstörungen der Zähne, wobei diese Gefahr mit zunehmender Drehzahl anwächst. Die freie Bewegbarkeit bzw. schwimmende Anordnung der Hülse ist nicht in zufriedenstellender Weise realisiert. Der vorbekannte Abgasturbolader ist für Drehzahlen bis ca. 80.000 U/min ausgelegt.

Ferner sind aus dem Hauptkatalog der Seeger-Orbis GmbH, Wiesbadener Str. 243, D-6240 Königstein/Taunus, Februar 1987, Sicherungsringe mit zungenförmigen Erweiterungen bekannt. Diese Erweiterungen enthalten Bohrungen, in welche zur Montage oder Demontage Stifte entsprechend ausgebildeter Zangen eingeführt werden. Derartige Sicherungsringe dienen zur axialen Festlegung von Lagerringen, Zahnrädern und sonstigen Maschinenbauteilen auf einer Welle und/oder innerhalb einer Bohrung. Eine Drehsicherung ist mit derartigen Sicherungsringen nicht ohne weiteres möglich.

Kleine Abgasturbolader, welche mit sehr hohen Drehzahlen rotieren, und zwar über 150 000 U/min, weisen recht kleine rotierende Massen bei minimalem Wellendurchmesser auf. Die durch die Wellenverformung bedingte Unwuchtbelastung kann bis zu dem hundertfachen Wert der Masse des Rotors betragen. Eine derartige Wellendurchbiegung und der hieraus resultierende Seilschlageffekt können unzulässig groß werden, so daß nicht nur die obengenannten mechanischen Schäden eintreten können, sondern auch mit einer starken Geräuschentwicklung gerechnet werden muß. Mit dem eingangs genannten Federelement lassen sich die aufgezeigten Probleme zum Teil lösen, wobei ein Verkanten der Hülse in der Lagerbohrung aufgrund der nur einseitigen Abfangung mit dem einen abgewinkelten Ende des Federelements sich ergeben kann. Aufgrund einer solchen Verkantung kann die Quetschöldämpfung zwischen der Hülse und der Lagerbohrung gestört werden oder gar ein metallischer Kontakt zwischen der Hülse und der Lagerbohrung erfolgen. Aufgrund der Linienberührung des Federelements in der Nut der Hülse und mit dem anderen Ende in der Ausnehmung des Lagergehäuses ist mit relativ großem Verschleiß zu rechnen. Auch durch das im Lagergehäuse vorhandene Schmiermittel kann dieser Verschleiß vor allem infolge der Linienberührung praktisch kaum vermieden werden.

Der Erfindung liegt daher die Aufgabe zugrunde, die genannte Abgasturbolader-Lagerung dahingehend weiterzubilden, daß anstelle des Federelements andere Mittel zur Drehsicherung der Hülse zum Einsatz gelangen können. Die Hülse soll im Hinblick auf das Schwingungsverhalten eine geringe Masse aufweisen und es soll ferner ein geräuscharmer Lauf gewährleistet werden. Hohe Flächenpressungen zwischen Anlageflächen und ein hieraus resultierender hoher Verschleiß sollen vermieden werden. Die Lebensdauer soll verbessert werden. Der Abgasturbolader soll mit einer extrem dünnen und/oder biegeweichen Welle ausgestattet werden können, wobei Reibungsverluste gering sein sollen. Auch bei kleinen rotierenden Massen, und zwar insbesondere des Turbinenrades, der dünnen Welle sowie des Verdichterrades des Abgasturboladers sollen eine stabile Rotordynamik und ferner ein geräuscharmer Lauf gewährleistet werden.

Die Lösung dieser Aufgabe erfolgt gemäß den kennzeichnenden Merkmalen des Patentanspruchs 1.

Die erfindungsgemäße Abgasturbolader-Lagerung zeichnet sich bei einfacher Konstruktion durch eine hohe Funktionssicherheit aus, wobei selbst bei hohen Drehzahlen größer als 150 000 U/min Lagerschäden oder störende Geräusche zuverlässig vermieden werden. Die Welle kann im Hinblick auf geringe Lagerreibungsverluste einen äußerst geringen Durchmesser aufweisen, und es wird ein stabiler Betrieb ohne die oben aufgezeigten Nachteile erreicht. Der zur Drehsicherung vorgesehene Sicherungsring besteht aus Federstahlblech und ist mit geringem Aufwand herstellbar. Der Sicherungsring wird aus Bandmaterial mit rechteckförmiger Querschnittsfläche durch Stanzen und Pressen, und zwar zweckmäßig in einem einzigen Arbeitsgang hergestellt, wodurch im Hinblick auf Serienfertigung und hohe Stückzahlen, vor allem im Vergleich mit dem eingangs erwähnten Federring, recht erhebliche Kosten- und Fertigungsvorteile sich ergeben. Die V-förmigen Sicken des Sicherungsringes greifen in entsprechend V-förmig ausgebildete Nuten an der Stirnseite der Hülse und bilden vergleichsweise große Anlageflächen, so daß die eingangs erwähnten hohen Flächenpressungen vermieden werden können. Die Sicken und die Nuten verlaufen im wesentlichen in radialer Richtung, wobei der Nutgrund in zweckmäßiger Weise an die abgerundete Kontur im Übergangsbereich der Außenflächen der Sicken angepaßt sein kann. Die Anpassung ist in der Weise vorgegeben, daß unter Berücksichtigung der Fertigungstoleranzen die flächige Anlage sicher gewährleistet wird. Die Nutflächen können daher auch in einem spitzen Winkel aufeinander treffen. Die Herstellung der V-förmigen Nut in die Stirnseite der Hülse kann in einfacher Weise und mit geringem Fertigungsaufwand mittels eines Formfräsers erfolgen. Ferner bildet sich zwischen der Stirnfläche der Hülse und dem Sicherungsring ein Ölfilm zur Verhinderung von Verschleiß aus. Die V-förmigen Sicken ragen in axialer Richtung über die im wesentlichen in einer Radialebene liegende Oberfläche des Sicherungsringes hinaus und greifen in die entsprechend ausgebildeten Nuten in der Stirnseite der Hülse. Zweckmäßig werden zwei diametral angeordnete Sicken im Sicherungsring vorgesehen, um eine symmetrische Abstützung gegen Verdrehen der Hülse zu erhalten. Die Hülse kann in der Lagerbohrung folglich nicht mehr verkanten und eine direkte Berührung der Flächen der Hülse und der Lagerbohrung wird vermieden. Schließlich ist eine Störung der Quetschöldämpfung zwischen Hülse und Lagerbohrung nicht zu befürchten.

Die Montage kann mit einem handelsüblichen Werkzeug erfolgen, wie es allgemein für Sicherungsringe zum Einsatz gelangt. Der Sicherungsring weist in an sich bekannter Weise zwei Enden mit kleinen Bohrungen auf, in welche zur Montage Spitzen einer Zange herkömmlicher Bauart eingesetzt werden. Diametral gegenüber enthält der Sicherungsring eine radial nach außen gerichtete Zunge, welche U-förmig ausgebildet ist und in die Ausnehmung des Lagergehäuses eingreift. Zur Montageerleichterung ist diese Zunge zweckmäßig aus der Ebene des Sicherungsringes heraus in einem Winkel derart abgewinkelt, daß die Zunge im eingebauten Zustand von der Hülse weggerichtet ist. Damit ist es in einfacher Weise möglich, den Sicherungsring im Bereich der Zunge bei der Montage zunächst festzulegen, wobei die Enden mit den genannten Bohrungen von der Lagerhülse entsprechend abstehen, so daß das in den Bohrungen der Enden eingesetzte Montagewerkzeug mit seinen Spitzen nicht an die Stirnflächen der Hülse heranreicht. Die Ausnehmung weist bevorzugt nur eine solche Tiefe auf, daß aufgrund der abgewinkelten Zunge der Sicherungsring nur in einer einzigen definierten Lage eingebaut werden kann. Die Bodenfläche der Ausnehmung liegt im wesentlichen bündig mit der Stirnfläche der Lagerhülse. Die Ausnehmung im Lagergehäuse zur Aufnahme der U-förmigen Zunge ist in axialer Richtung des Lagergehäuses bevorzugt so tief angeordnet, wie die der Lagerhülse nächstliegende hintere Fläche der in dieser ersten Ausgestaltung als Ringnut ausgebildeten Ringkammer. Der Sicherungsring kann daher nicht in einer um 180° verdrehten Position eingebaut werden, denn dies verhindert die Bodenfläche der Ausnehmung. Nach dem Herausnehmen des Montagewerkzeugs bzw. der Zange kann der Sicherungsring mit den beiden Enden in Richtung zur Hülse gedrückt werden und vollständig in der Ringnut des Lagergehäuses einrasten.

In einer besonderen Ausgestaltung der Erfindung erfolgt die axiale Festlegung des Sicherungsringes im Lagergehäuse mittels eines zweiten Ringes, wobei der Sicherungsring ausschließlich die Drehsicherung der Lagerhülse gewährleistet. Aufgrund dieser Funktionstrennung sind zwei Teile vorhanden, nämlich Sicherungsring zur Drehsicherung und zusätzlicher Ring zur axialen Sicherung, welche material- und funktionsgerecht unabhängig voneinander ausgelegt werden können. Hierdurch ergeben sich nicht unerhebliche Vorteile gegenüber der ersten Ausführungsform des Sicherungsringes zur axialen und zur Drehsicherung. Bei der ersten Ausführungsform können sich Probleme dadurch ergeben, daß der aus Federstahl hergestellte Sicherungsring aufgrund seiner nicht allzu hohen Elastizität vor allem an den Biegestellen bricht. Des weiteren kann eine Bruchgefährdung aufgrund der offenen Ausbildung des Sicherungsringes sich ergeben. Da der Sicherungsring gemäß der ersten Ausführungsform in die Nut des Gehäuses eingesetzt ist, ist funktionsbedingt mit einer Vorspannung zu rechnen, welche infolge von hochfrequenten Schwingungen im Betrieb zu einem Bruch führen kann. Schließlich ergeben sich erhebliche Schwierigkeiten, um eine Automatisierung der Montage des Sicherungsringes der ersten Ausführungsform durchführen zu können. Aufgrund der mit der zweiten Ausführungsform erreichten Funktionstrennung und Aufteilung einerseits in Sicherungsring zur Drehsicherung und anderer-seits in einen zweiten Ring zur axialen Sicherung, werden die aufgezeigten Schwierigkeiten zuverlässig vermieden. Nunmehr kann der Sicherungsring automatisch in die dafür vorgesehene Nut des Lagergehäuses mit Spiel eingelegt werden. Nachfolgend wird gleichfalls automatisiert mittels eines Werkzeuges, insbesondere eines Konus, der weitere Ring in das Lagergehäuse eingesetzt. Der zweite Ring ist in einer entsprechenden Ringnut des Lagergehäuses axial festgelegt und übernimmt die axiale Fixierung des Sicherungsringes, welcher nunmehr ohne Vorspannung und mit einem hinreichenden Spiel in axialer und/oder radialer Richtung festgelegt ist. Der zweite Ring kann als Sicherungsring nach DIN 472 in Regelausführung oder schwerer Ausführung ebenso ausgebildet sein wie als L-Ring, V-Ring oder als Sprengring nach DIN 5417 bzw. 7993; selbstverständlich können im Rahmen der Erfindung auch andere Ringe vorgesehen werden, welche innerhalb einer Bohrung oder Nut axial festgelegt sind und ihrerseits die axiale Festlegung eines weiteren Bauteiles, hier des Sicherungsringes samt der Lagerhülse, ermöglichen. Da der Sicherungsring nicht aus gehärtetem Material (wie Federstahl) besteht, wird in vorteilhafter Weise die Gefahr eines Bruches vermieden und die Dämpfungswirkung nicht unerheblich verbessert. Die Herstellung des Sicherungsringes wird vereinfacht, wobei praktisch kein Ausschuß mehr zu befürchten ist.

Weitere Ausgestaltungen sind in den Unteransprüchen angegeben. Die Erfindung wird nachfolgend anhand der in der Zeichnung dargestellten besonderen Ausführungsbeispiele näher erläutert. Es zeigen:
- Fig. 1: einen axialen Längsschnitt durch einen Abgasturbolader,
- Fig. 2: einen Schnitt entlang Schnittlinie A gemäß Fig. 1,
- Fig. 3: einen Schnitt entlang der Schnittlinie B gemäß Fig. 2,
- Fig. 4, 5: Ansichten des Sicherungsringes in axialer bzw. radialer Richtung,
- Fig. 6: teilweise einen axialen Längsschnitt durch ein zweites Ausführungsbeispiel,
- Fig. 7, 8: Ansichten des Sicherungsringes gemäß Fig. 6 in axialer bzw. radialer Richtung.

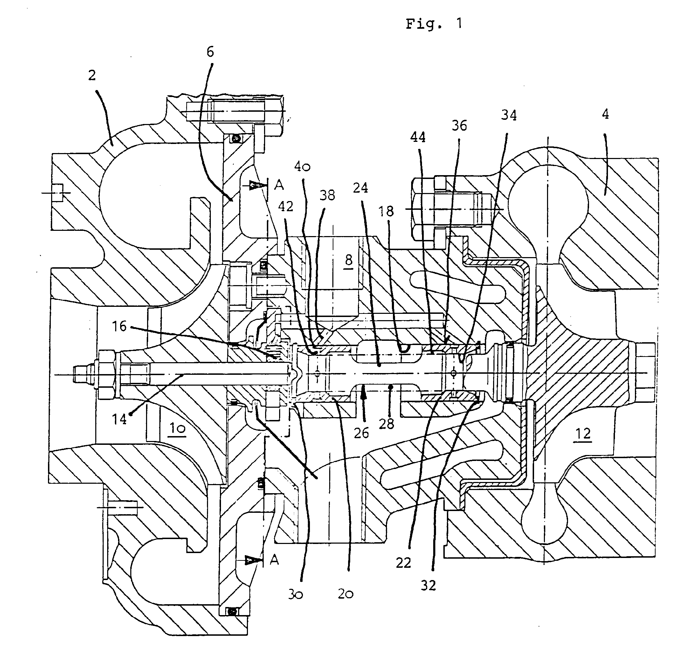

In Fig. 1 ist links ein Verdichtergehäuse 2 und rechts ein Turbinengehäuse 4 dargestellt, welche in bekannter Weise über ein Lagergehäuse 6 miteinander verbunden sind. Ein Verdichterrad 10 und ein Turbinenrad 12 sind auf einer Welle 14 drehfest angeordnet, für welche im Lagergehäuse 6 zur axialen Lagerung ein Axiallager 16 vorgesehen ist. Durch eine Bohrung 8 kann Drucköl, insbesondere vom Motor, dem Lagergehäuse 6 zur Schmierung und Kühlung der Lager zugeführt werden.

Die Welle 14 weist einen relativ kleinen Durchmesser auf und ist in einer Innenbohrung 18 des Lagergehäuses 6 mittels zwei axial beabstandeten Lagerbuchsen 20, 22 radial gelagert. Diese beiden Lagerbuchsen 20, 22 sind mittels zwei axial verlaufenden, schmalen Stegen 24 miteinander zu einer Hülse 26 integriert. In der Zeichnung ist nur der eine hinter der Zeichenebene liegende Steg 24 zu erkennen. Der zweite Steg ist entsprechend vor der Zeichenebene angeordnet. Die Hülse 26 weist zwischen den beiden Stegen 24 jeweils eine Durchbrechung 28 auf. Die Stege 24 sind jeweils seitlich der Welle angeordnet, und durch die vertikal unterhalb der Welle befindliche Durchbrechung 28 kann das Schmiermittel ungehindert abfließen; ein Stauen des Öls im mittleren Bereich der Hülse und hieraus resultierende Verluste werden vermieden. Die beiden Stege 24 weisen in axialer Richtung näherungsweise die gleiche Länge auf wie die nachfolgend noch zu erläutern-den äußeren Lagerflächen 36 der beiden Lagerbuchsen 20, 22.

Die Hülse 26 ist im Lagergehäuse 6 axial zwischen zwei Sicherungsringen 30, 32 mit Spiel angeordnet, wobei die axiale Lagerung der Welle 14 mittels des bereits erwähnten Axiallagers 16 erfolgt. Der dem Turbinenrad 12 zugekehrte Sicherungsring 32 ist in herkömmlicher Weise ausgebildet, in einer Ringnut des Lagergehäuses angeordnet und er dient ausschließlich zur axialen Sicherung. Hingegen ist der Sicherungsring 30, welcher dem Axiallager 16 bzw. dem Verdichterrad 10 zugewandt ist, in besonderer Weise zur Drehsicherung ausgebildet, wie es nachfolgend im einzelnen noch zu erläutern sein wird.

Die äußeren Lagerflächen 36 der Lagerbuchsen 20, 22 weisen jeweils eine größere Länge auf als die inneren Lagerflächen 34. Zwischen der Innenbohrung 18 und den äußeren Lagerflächen 36 ist somit jeweils ein Quetschölspalt vorhanden, der eine wesentlich größere axiale Länge und damit Fläche aufweist als die inneren Lagerflächen 34. Zur jeweiligen Lagerfläche führt eine Bohrung 38, durch welche das in die Bohrung 8 eingespeiste Drucköl den Lagerflächen zugeführt wird. Die Lagerbuchsen enthalten Umfangsnuten 40 mit vier über den Umfang verteilten Radialbohrungen 42, durch welche das Drucköl zu den inneren Lagerflächen gelangt. Zur Mitte der Hülse 26 hin schließen an die inneren Lagerflächen 34 jeweils Erweiterungen 44 mit vergrößertem Durchmesser an. Diese Erweiterungen 44 gehen kontinuierlich in die Stege 24 über, welche einen entsprechenden radialen Abstand zur Welle 14 aufweisen. Die beiden Erweiterungen 44 weisen eine axiale Erstreckung in der Größenordnung der inneren Lagerflächen 34 auf. Die inneren Lagerflächen 34 sind somit wesentlich kleiner als die äußeren Lagerflächen 36, wodurch Reibungsverluste klein gehalten werden.

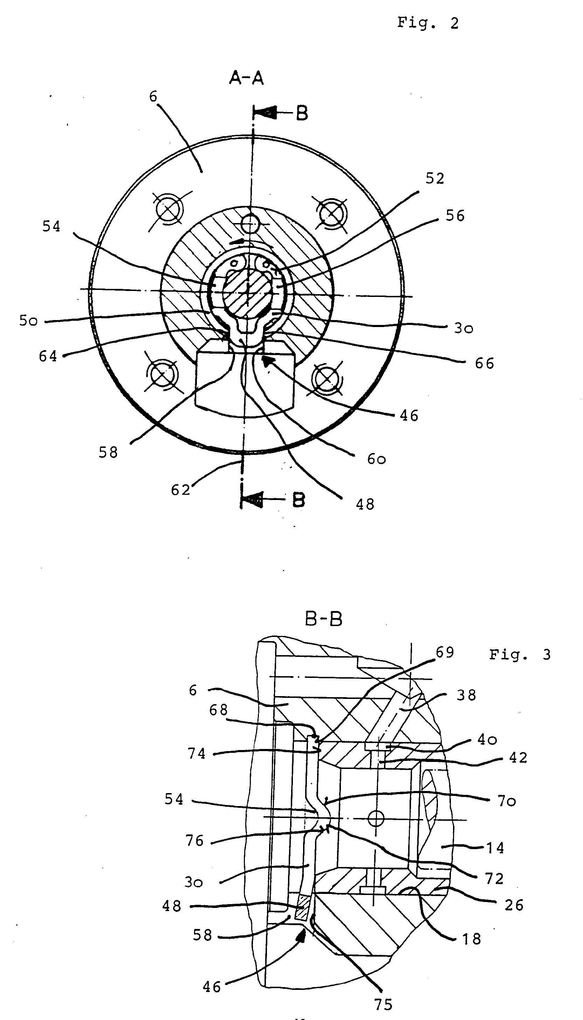

Fig. 2 zeigt einen Schnitt entlang Schnittlinie A gemäß Fig. 1 auf das Lagergehäuse 6, welches eine Ausnehmung 46 aufweist. In diese Ausnehmung 46 greift der Sicherungsring 30 mit einer U-förmigen Zunge 48. Der Sicherungsring 30 ist mit seinen radial außenliegenden Stützteilen 50 und Endteilen 52 in einer hinter der Zeichenebene befindlichen Ringnut des Lagergehäuses angeordnet. Der Sicherungsring 30 weist diametral gegenüber der Ausnehmung 48 die zwei Endteile 52 auf, welche in bekannter Weise Bohrungen für ein Montagewerkzeug enthalten. Im wesentlichen um einen Winkel von 90° verdreht zur Zunge 48 bzw. den beiden Endteilen 52 enthält der Sicherungsring 30 zwei radiale Sicken 54, 56, deren Spitzen in Richtung zur Lagerhülse, also hier hinter die Zeichenebene, weisen. Mittels der radial nach außen gebogenen Zunge 48 wird der Sicherungsring 30 in Umfangsrichtung im Lagergehäuse 6 festgelegt. Die Sicken 54, 56 greifen in entsprechende Nuten der Lagerhülse, welche somit bezüglich des Lagergehäuses 6 gegen Drehung gesichert ist. Die Ausnehmung 46 enthält zwei Anlageflächen 58, 60, welche sich in axialer Richtung erstrecken und insbesondere im wesentlichen parallel und/oder symmetrisch zur Mittelebene 62 der Ausnehmung 46 liegen. Aufgrund der axialen Erstreckung der Anlageflächen 58, 60 wird gewährleistet, daß die gleichfalls sich in axialer Richtung erstreckenden Seitenflächen 64, 66 der Zunge 48 nicht nur linienförmig, sondern über eine vergleichsweise große Fläche anliegen, wodurch unzulässig hohe Flächenpressungen vermieden werden.

Fig. 3 zeigt vergrößert einen Ausschnitt entlang Schnittlinie B gemäß Fig. 2, wobei die Welle 14 nur zum Teil dargestellt ist. Das Lagergehäuse 6 mit der Bohrung 38 für das Drucköl und ebenso die Lagerhülse 26 mit der Umfangsnut 40 und den Radialbohrungen 42 sind gut zu erkennen. An der axialen Stirnfläche 74 der Hülse 26 befindet sich der Sicherungsring 30, welcher mit seinen radial äußeren Bereichen in der hier als Ringnut ausgebildeten Ringkammer 68 des Lagergehäuses 6 angeordnet ist. Das zur freien, schwimmenden Bewegbarkeit der Hülse 26 sowohl in radialer Richtung bezüglich der Innenbohrung 18 als auch in axialer Richtung bezüglich des Sicherungsringes 32 vorhandene Spiel ist aus Gründen der Übersichtlichkeit nicht dargestellt. Ferner ist die Anlagefläche 58 der Ausnehmung 46 zu erkennen, wobei an dieser Anlageflche 58 die zur Zeichenebene im wesentlichen parallele Seitenfläche der Zunge 48 anliegt. Die Bodenfläche 75 der Ausnehmung 46 liegt im wesentlichen in der gleichen Radialebene wie die hintere Fläche 69 der Ringnut bzw. Ringkammer 68. Aufgrund der abgewinkelten Zunge 48 wird damit sichergestellt, daß der Sicherungsring 30 immer so eingebaut wird, daß die Sicke 54 in die Nut 76 eingreift. Hierdurch wird die Montagesicherheit erhöht, da ein Einbau des Sicherungsringes 30 in einer um 180° gedrehten Position nicht möglich ist. Es wird erreicht, daß beim Einsetzen des Sicherungsringes 30 mit dem Werkzeug die Kante der U-förmigen Zunge 48 die Bodenfläche 75 berührt und ein verkehrtes Einsetzen des Sicherungsringes 30 in die Ringnut 68 nicht möglich ist. Die Sicke 54 weist einen im wesentlichen V-förmigen Querschnitt auf und sie erstreckt sich im wesentlichen in radialer Richtung. Auch die ebenen Außenflächen 70, 72 der Sicke 54 verlaufen im wesentlichen V-förmig, und zwar in einem winkel in der Größenordnung von 90° zueinander. Die Hülse 26 weist im Bereich ihrer axialen Stirnfläche eine gleichfalls V-förmig ausgebildete Nut 76 auf, in welche die Sicke 54 eingreift. Die Nut 76 verläuft gleichfalls im wesentlichen in radialer Richtung. Gegenüber-liegend, und zwar gemäß Fig. 3 vor der Zeichenebene, weist der Sicherungsring die bereits erwähnte andere Sicke auf und ebenso die Hülse 26 eine weitere Nut entsprechend der erläuterten Nut 76. Die beiden Nuten werden in die Stirnfläche in einfacher Weise mittels eines Formfräsers in einem einzigen Arbeitsgang eingebracht. Die Kontur der ebenen Nutflächen entspricht den Außenflächen 70, 72 einschließlich des beim Biegen oder Pressen entstandenen Übergangsradius zwischen den in einem Winkel in der Größenordnung von 90° zueinander angeordneten Außenflächen 70, 72. Die Außenflächen 70, 72 der Sicke 54 liegen plan an den gegenüberliegenden Flächen der Nut 76 an, wobei eine Linienberührung und damit verbundene hohe Flächenpressungen zuverlässig vermieden werden. Die Lagerhülse 26 liegt mit axialem Spiel zwischen dem hier zu erkennenden Sicherungsring 30 und dem anderen Sicherungsring, der eingangs bereits erläutert wurde. Das durch die Bohrung 38 zugeführte Schmiermittel gelangt teilweise auch in den Umfangsspalt zwischen dem Lagergehäuse 6 und der Hülse 26 und von dort zur Stirnfläche 74 und zum Sicherungsring 30 und damit auch in den Bereich der Nut 76, wodurch zuverlässig Verschleiß verhindert wird. Mittels den Nuten 76 und den Stirnflächen 72, 74 wird die Hülse 26 gegen Drehung gesichert, wobei im übrigen jedoch die freie Bewegbarkeit der Hülse bezüglich der anderen Freiheitsgrade gewährleistet wird. Desweiteren wird insbesondere aufgrund der symmetrischen, diametral einander gegenüberliegenden Anordnung der beiden Sicken bzw. Nuten ein Verkanten der Hülse 26 in der Innenbohrung des Lagergehäuses 6 vermieden, so daß auch keine Beeinträchtigung der Quetschöldämpfung zwischen Hülse und Lager- bzw. Innenbohrung erfolgt.

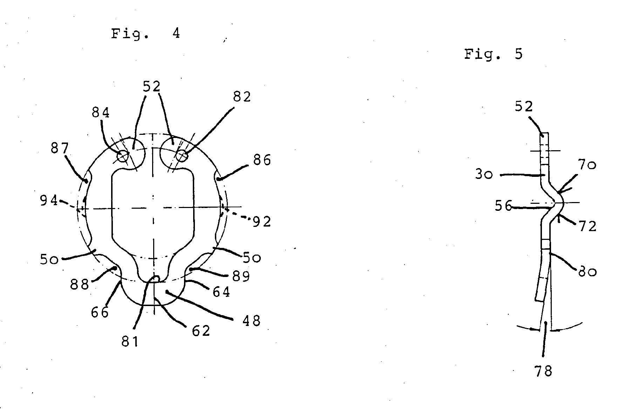

Fig. 4 und 5 zeigen den Sicherungsring 30 in einer axialen bzw. radialen Ansicht. Der Sicherungsring besteht aus Federstahlblech, und ist als Stanzteil in einem einzigen Arbeitsgang hergestellt worden. Die Sicken 54, 56 weisen axial in Richtung zur Lagerhülse, während die U-förmige Zunge 48 in einem kleinen Winkel 78 in der anderen Richtung abgekantet ist. Die Innenseite 81 der Zunge 48 ist vom Zentrum mit einem Radius beabstandet, der wenigstens gleich oder größer ist als der Radius der äußeren, gestrichelt dargestellten Umfangsflächen der Stützteile 50; damit ist eine hinreichende Federung in Umfangsrichtung gewährleistet. Die U-förmige Ausbildung der Zunge 48 ergibt eine zusätzliche Federwirkung. Es sei aber festgehalten, daß die Innenseite 81 der Zunge ggfs. auch auf einem kleinen Radius liegen kann. Wichtig ist hierbei, daß der Bereich 80, an welchem die Abkantung der Zunge 48 radial nach außen beginnt, sich an der Stelle befindet, an welcher die Ringnut des Lagergehäuses in die Ausnehmung übergeht. Der Sicherheitsring 30 weist an seinen beiden durch einen Spalt voneinander getrennten Endteilen 52 jeweils eine Bohrung 82, 84 für ein Montagewerkzeug, insbesondere eine handelsübliche Zange, zum Montieren von Sicherheitsringen auf.

Der Sicherungsring 30 weist im Bereich der Sicken 54, 56 Ausnehmungen 86, 87 auf, um ein einwandfreies Einsetzen in die Ringnut des Lagergehäuses zu ermöglichen. Desweiteren wird mittels diesen Aussparungen 86, 88 sichergestellt, daß Materialanhäufungen 90, 92, welche im Bereich der Sickenspitze radial nach außen aufgrund des Biegevorganges gedrückt sind und das ordnungsgemäße Einsetzen in die Ringnut verhindern könnten. Der Sicherungsring 30 greift mit den Stützteilen 52 sowie den radial außenliegenden Bereichen der Endteile 50 in die Ringnut des Lagergehäuses. Damit auch im Bereich der abgekanteten Zunge ein einwandfreier Sitz erreicht wird, sind seitlich dieser Zunge 48 gleichfalls Ausnehmungen 88, 89 vorgesehen.

In Verbindung mit Fig. 1 soll nachfolgend die Montage des Sicherungsringes erläutert werden. Zunächst wird der konventionelle, insbesondere nach DIN gefertigte, Sicherungsring 32 und die Hülse 26 in die Innenbohrung 18 des Lagergehäuses eingesetzt. Der die Sicken aufweisende erfindungsgemäß ausgebildete Sicherungsring 30 wird dann mit einer handelsüblichen Zange derart aufgenommen, daß deren Spitzen in die Bohrungen 82, 84 der Endteile eingreifen, welche somit zusammengedrückt werden können. Der Sicherungsring wird dann mit dieser Zange derart in die Innenbohrung 18 eingeführt, daß die U-förmige Zunge 48 zunächst in die Ausnehmung des Lagergehäuses 6 eingreift und eingesetzt werden kann. Es sei angemerkt, daß die Spitzen der Zange länger sind als die Materialdicke des Sicherungsringes 30 und somit über dessen Außenfläche vorstehen. Die Zunge befindet sich im wesentlichen in einer Radialebene, wobei im übrigen der Sicherungsring 30 von der Stirnfläche der Lagerhülse 26 abgewinkelt ist, wobei die Endteile mit den Bohrungen 82, 84 den größten Abstand zur Stirnfläche der Lagerhülse aufweisen. Im Bereich der Zunge rastet der Sicherungsring 32 schon in die Ringnut des Lagergehäuses ein, so daß nunmehr die Zange mit den Spitzen aus den Bohrungen 82, 84 herausgenommen werden kann. Nachfolgend wird der Sicherungsring 30 mit einem leichten axialen Druck in Richtung der Lagerhülse bewegt, bis er vollständig in die Ringnut auch mit den Endteilen einfedert. Im fertig montierten Zustand steht die Zunge 48 entsprechend dem Winkel 78 von der Stirnfläche der Hülse 26 ab. Ohne die Abkantung der Zunge 48 würden die durch die Bohrungen 82, 84 durchgreifenden Spitzen an der Stirnfläche anliegen, bevor der Sicherungsring in die Ringnut einrastet.

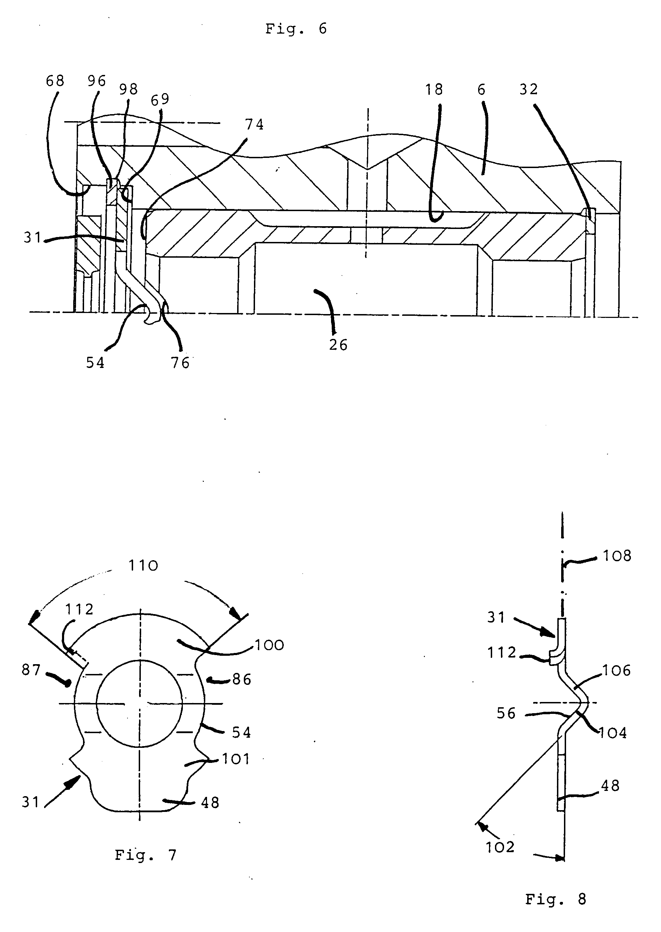

Fig. 6 zeigt eine besondere Ausgestaltung der Erfindung in einem axialen Längsschnitt. Die mit dem Abgasturbolader gemäß Fig. 1 übereinstimmenden Bauteile sind nicht weiter dargestellt und sollen nachfolgend auch nicht erläutert werden. Der Stirnfläche 74 gegenüber ist in der Ringkammer 68 der Sicherungsring 31 mit der Sicke 54 angeordnet, welche in die Nut 76 der Hülse 26 eingreift. Die Ringkammer 68 weist einen größeren Durchmesser als die Innenbohrung 18 auf und ist in Richtung zur Turbine durchgehend offen ausgebildet, so daß der Sicherungsring 31 in axialer Richtung ohne Deformation mit Spiel eingelegt werden kann. Zur axialen Sicherung dient bei dieser Ausgestaltung ein zusätzlicher Ring 96, welcher in einer Ringnut 98 der Ringkammer 68 eingesetzt ist. Der zusätzliche Ring 96 kann als Sicherungsring nach DIN 472, als V-Ring, K-Ring, Sprengring oder dergleichen ausgebildet sein. Dieser zusätzliche Ring 68 kann allgemein als ein axiales Sicherungselement für Bohrungen in den unterschiedlichsten Ausführungsformen ausgebildet sein. Die Montage kann in einfacher Weise auf automatisierten Anlagen durchgeführt werden, wobei zunächst der Sicherungsring 31 in die Ringkammer 68 mit Spiel eingelegt wird und nachfolgend der zusätzliche Ring 96 zur axialen Sicherung in die Ringnut 98 eingesetzt wird.

Der Sicherungsring 31 besteht aus einem nicht gehärteten Stahl und besitzt somit eine im Vergleich zu Federstahl verbesserte Dämpfungswirkung, welche sich positiv auf das Zusammenspiel mit der Lagerbuchse 20 der Hülse 26 auswirkt. Die absolute Bewegbarkeit der Hülse 26 in axialer Richtung zum Lagergehäuse 6 ist bei dieser besonderen Ausführungsform durch die Federeigenschaft des Sicherungsringes 31 im Vergleich mit der Ausführungsform gemäß Fig. 1 vergrößert. Der Sicherungsring 31 sitzt lose in der Ringkammer 68 zwischen deren hinteren Fläche 69 und dem zusätzlichen Ring 96, wobei sowohl axial als auch radial aufgrund des vorgegebenen Spiels eine Bewegbarkeit erreicht wird. Die Einschränkung der Bewegbarkeit der schwimmenden Lagerhülse wird somit auf ein Minimum reduziert und die Rotordynamik weiter verbessert.

Fig. 7 und 8 zeigen Ansichten des Sicherungsringes 31 in axialer bzw. radialer Richtung. In dieser besonderen Ausgestaltung ist der Sicherungsring 31 als eine über den Umfang geschlossene Scheibe ausgebildet. Wie in Vergleich mit Fig. 4 ersichtlich, ist die Zunge 48 massiv ausgebildet, da der Sicherungsring 31 zur Montage nicht zusammengedrückt werden muß, sondern in einfacher Weise in die Ringkammer 68 ohne Deformierung einzulegen ist. Die Zunge 48 ist hierbei nicht aus der Ebene des Sicherungsringes abgewinkelt. Der Sicherungsring 31 weist im Bereich der Sicken 54, 56 wiederum seitliche Ausnehmungen 86, 87 auf, um das Eingreifen in die zugeordneten Nuten der Lagerbuchse zu ermöglichen. Die radial äußeren Teile 100, 101 erstrecken sich jeweils über einen Winkel 102, welcher im wesentlichen 90° groß ist. Hierdurch wird eine sichere axiale Anlage einerseits an der hinteren Fläche der Ringkammer und andererseits an dem zusätzlichen Ring 96 gewährleistet. Die genannten Ausnehmungen 86, 87 erstrecken sich jeweils gleichfalls über einen Winkel in der Größenordnung von 90°.

Wie aus Fig. 8 ersichtlich, sind die Wände 104, 106 der Sicke 56 bezüglich einer Radialebene 108 in einem Winkel 110 in der Größenordnung von 45° geneigt; entsprechendes gilt für die Sicke 54. An dem oberen, äußeren Bereich 100 ist ein Montagenocken 112 vorgesehen, welcher dem genannten zusätzlichen Ring zugekehrt ist und in dessen Öffnung eingreift. Es wird festgehalten, daß der zusätzliche Ring zum Einsetzen in die erläuterte Ringnut zwei freie Enden aufweist, zwischen welchen eine Öffnung vorhanden ist. Der Montagenocken 112 wird erforderlich, falls die Auflagefläche des zusätzlichen Ringes über den Umfang der Ringnut nicht konstant ist; dies ist insbesondere bei Ausbildung als V-Ring der Fall. Wird ein derartiger mit Nocken versehener Ring beliebig eingelegt, so kann er mit seinen Nocken in der für die Zunge vorgesehenen Ausnehmung des Lagergehäuses zum Liegen kommen; die für den Ring erforderliche Spannung ist dann nicht mehr vorhanden. Um dies zu vermeiden, wird der zusätzliche Ring derart eingelegt, daß der Montagenocken 112 des Sicherungsringes 31 in die Öffnung eingreift, welche zwischen den freien Enden des zusätzlichen Ringes vorhanden ist. Ein Verdrehen des zusätzlichen Ringes ist damit unterbunden. Der Montagenocken 112 ist in dem äußeren Bereich 100 angeordnet, welcher der Zunge 48 gegenüber liegt. Der Montagenocken 112 kann auch an anderer Stelle des oberen, äußeren Bereiches 100 angeordnet sein.

### Bezugszeichenliste

- 2: Verdichtergehäuse
- 4: Turbinengehäuse
- 6: Lagergehäuse
- 8: Bohrung
- 10: Verdichterrad
- 12: Turbinenrad
- 14: Welle
- 16: Axiallager
- 18: Innenbohrung
- 20, 22: Lagerbuchse
- 24: Steg
- 26: Hülse
- 28: Durchbrechung
- 30 - 32: Sicherungsring
- 34: innere Lagerfläche
- 36: äußere Lagerfläche
- 38: Bohrung
- 40: Umfangsnut
- 42: Radialbohrung
- 46: Ausnehmung
- 48: Zunge
- 50: Stützteil von 30
- 52: Endteil von 30
- 54, 56: Sicke
- 58, 60: Anlagefläche
- 62: Mittelebene
- 64, 66: Seitenfläche
- 68: Ringkammer
- 69: hintere Fläche von 68
- 70, 72: Außenfläche von 54, 56
- 74: Stirnfläche von 26
- 75: Bodenfläche von 46
- 76: Nut von 26
- 78: Winkel
- 80: Bereich
- 81: Innenseite
- 82, 84: Bohrung
- 86 - 89: Ausnehmung
- 90, 94: Materialanhäufung
- 96: zusätzlicher Ring
- 98: Ringnut in 68
- 100, 101: äußerer Bereich von 31
- 102: Winkel
- 104, 106: Wand
- 108: Radialebene
- 110: Winkel
- 112: Montagenocken

## Patentansprüche

1. Abgasturbolader-Lagerung mit einer Hülse (26), die in einer Bohrung (18) eines Lagergehäuses (6) zur radialen Lagerung einer Welle (14) schwimmend angeordnet und gegen axiale Verschiebung gesichert ist, wobei mit einem im Lagergehäuse (6) angeordnetem Element eine Sicherung gegen Drehung erfolgt, welches Element einerseits in eine Nut (76) der Hülse (28) und andererseits in eine Ausnehmung (46) des Lagergehäuses (6) eingreift,
dadurch gekennzeichnet,
daß das Element als ein in einer Ringkammer (68) des Lagergehäuses (6) angeordneter Sicherungsring (30, 31) ausgebildet ist,
daß der Sicherungsring (30, 31) eine Zunge (48) aufweist, welche in die an die Ringkammer (68) anschließende Ausnehmung (46) des Lagergehäuses (6) eingreift,
daß der Sicherungsring (30, 31) wenigstens eine zur axialen Stirnfläche (74) der Hülse (26) ausgerichtete Sicke (54, 56) aufweist
und daß die Außenfläche (70, 72) der Sicke (54, 56) an wenigstens einer Fläche der Nut (76) der Hülse (26) anliegt.

2. Abgasturbolader-Lagerung nach Anspruch 1, dadurch gekennzeichnet, daß die Sicke (54, 56) und die Nut (76) im wesentlichen eine V-förmige Kontur aufweisen und/oder in radialer Richtung verlaufen.

3. Abgasturbolader-Lagerung nach Anspruch 1 oder 2, dadurch gekennzeichnet, daß der Sicherungsring (30, 31) zwei gegenüberliegende Sicken (54, 56) aufweist, wobei in der Stirnfläche (74) der Hülse (26) gleichfalls zwei gegenüberliegende Nuten (76) entsprechend angeordnet sind.

4. Abgasturbolader-Lagerung nach einem der Ansprüche 1 bis 3, dadurch gekennzeichnet, daß die Sicke (54, 56) und die Nut (76) im wesentlichen in einer Ebene angeordnet sind, welche orthogonal zur Bohrung (8) verläuft, und/oder daß hierbei die Zunge (48) im wesentlichen in der gleichen Axialebene wie die genannte Bohrung (8) angeordnet ist.

5. Abgasturbolader-Lagerung nach einem der Ansprüche 1 bis 4, dadurch gekennzeichnet, daß die Zunge (48) mit einer Seitenfläche (64, 66) an einer Anlagefläche (58, 60) der Ausnehmung (46) anliegt, wobei die genannten Flächen bevorzugt in axialer Richtung verlaufen und/oder plan ausgebildet sind und/oder daß die Zunge (48) um einen vorgegebenen Winkel (78) von den übrigen Teilen des Sicherungsringes (30, 31) abgekantet ist, und zwar axial entgegengesetzt der Sicke (54, 56).

6. Abgasturbolader-Lagerung nach einem der Ansprüche 1 bis 5, dadurch gekennzeichnet, daß eine Bodenfläche (75) der Ausnehmung (46) im wesentlichen in der gleichen Radialebene wie eine hintere Fläche (69) der Ringkammer (68) angeordnet ist.

7. Abgasturbolader-Lagerung nach einem der Ansprüche 1 bis 6, dadurch gekennzeichnet, daß der Sicherungsring (30, 31) radial außen im Bereich der Sicke (54, 56) eine Ausnehmung (86, 87) und/oder seitlich der Zunge (48) jeweils eine Ausnehmung (88, 89) aufweist.

8. Abgasturbolader-Lagerung nach einem der Ansprüche 1 bis 7, dadurch gekennzeichnet, daß der in der als eine Ringnut ausgebildeten Ringkammer (68) zugeordnete Sicherungsring (30) symmetrisch bezüglich einer bevorzugt vertikal ausgerichteten Mittelebene (62) ausgebildet ist, wobei zwei beabstandet angeordnete Endteile (52) mit Bohrungen (82, 84) vertikal oben angeordnet sind und die Zunge (48) nach unten ausgerichtet ist.

9. Abgasturbolader-Lagerung nach einem der Ansprüche 1 bis 8, dadurch gekennzeichnet, daß die Zunge (48) im wesentlichen U-förmig ausgebildet ist um eine Federwirkung zu erhalten, und/oder daß die Innenseite (81) zumindest den gleichen Radius wie die Außenflächen der Stützteile (50) aufweist.

10. Abgasturbolader-Lagerung nach einem der Ansprüche 1 bis 7, dadurch gekennzeichnet, daß der Sicherungsring (31) in der Ringkammer (68) mittels eines zusätzlichen Ringes (96) gegen axiale Verschiebung gesichert ist, wobei der Sicherungsring (31) axial zwischen dem zusätzlichen Ring (96) und einer hinteren Fläche (69) der Ringkammer (68) bevorzugt mit axialem Spiel angeordnet ist und/oder radial bezüglich der Innenfläche der Ringkammer (68) Spiel aufweist.

11. Abgasturbolader-Lagerung nach einem der Ansprüche 1 bis 7, 10, dadurch gekennzeichnet, daß der Sicherungsring (31) diametral angeordnete äußere Bereiche (100, 101) aufweist, deren Außendurchmesser größer ist als der Innendurchmesser des zusätzlichen Ringes (96) und/oder welche äußeren Bereiche (100, 101) sich jeweils über einen Winkel (101) erstrecken, welcher im wesentlichen 90 Winkelgrade groß ist.

12. Abgasturbolader-Lagerung nach einem der Ansprüche 1 bis 7, 10, 11, dadurch gekennzeichnet, daß der Sicherungsring (31) über dem Umfang geschlossen ausgebildet ist und in axialer Richtung ohne Deformation und/oder mit Spiel bezüglich der Innenwand der Ringkammer (68) einsetzbar ist, welche zum Ende des Lagergehäuses offen und insbesondere mit gleichbleibendem Durchmesser ausgebildet ist.

13. Abgasturbolader-Lagerung nach einem der Ansprüche 1 bis 7, 10 bis 12, dadurch gekennzeichnet, daß der Sicherungsring (31) einen Montagenocken (112) aufweist, welcher in eine Öffnung des zusätzlichen Ringes (96) eingreift, wobei diese Öffnung zwischen gegenüberliegenden freien Enden des zusätzlichen Ringes (96) vorhanden ist.

## Claims

1. Turbocharger bearing with a sleeve (26) which is floatingly disposed in a bore (18) of a bearing case (6) for the radial mounting of a shaft (14) and is secured against axial displacement, while an element disposed in the bearing case (6) secures it against rotation, which element engages on the one hand in a groove (76) in the sleeve (28) and on the other hand in a recess (46) of the bearing case (6), characterized in that the element is configured as a retaining ring (30, 31) disposed in a ring chamber (68) of the bearing case (6), that the retaining ring (30, 31) has a tongue (48) which engages in the recess (46) of the bearing case (6) adjoining the ring chamber (68), that the retaining ring (30, 31) has at least one boss (54, 56) aimed at the axial end face (74) of the sleeve (26), and in that the outside surface (70, 72) of the boss (54, 56) contacts at least one surface of the groove (76) in the sleeve (26).

2. Turbocharger bearing according to claim 1, characterized in that the boss (54, 56) and the groove (76) have a substantially V-shaped contour and/or extend in a radial direction.

3. Turbocharger bearing according to claim 1 or 2, characterized in that the retaining ring (30, 31) has two oppositely situated bosses (54, 56), whereby two oppositely situated grooves (76) are likewise arranged accordingly in the end face (74) of the sleeve (26).

4. Turbocharger bearing according to any one of claims 1 to 3, characterized in that the boss (54, 56) and the groove (76) are disposed substantially in a plane which is orthogonal to the bore (8), and/or in that the tongue (48) is disposed in substantially the same axial plane as the said bore (8).

5. Turbocharger bearing according to any one of claims 1 to 4, characterized in that the tongue (48) is in contact at one lateral surface (64, 66) with an abutment surface (58, 60) of the recess (46), the said surfaces running preferably in the axial direction and/or being of planar configuration and/or that the tongue (48) is bent away from the other portions of the retaining ring (30, 31) by a given angle (78), axially oppositely away from the boss (54, 56).

6. Turbocharger bearing according to any one of claims 1 to 6, characterized in that a bottom face (75) of the recess (46) is disposed substantially in the same radial plane as a rear surface (69) of the ring chamber (68).

7. Turbocharger bearing according to any one of claims 1 to 6, characterized in that the retaining ring (30, 31) has cutouts (86, 87) radially outside in the area of the boss (54, 56) and/or has cutouts (88, 89) laterally of the tongue (48).

8. Turbocharger bearing according to any one of claims 1 to 7, characterized in that the retaining ring (30) disposed in the ring chamber (68) configured as an annular groove is configured symmetrically with respect to a preferably vertically disposed central plane (62), two spaced-apart end portions (52) with holes (82, 84) being disposed vertically on top, and the tongue (48) pointing downwardly.

9. Turbocharger bearing according to any one of claims 1 to 8, characterized in that the tongue (48) is substantially U-shaped in order to provide a spring action and/or in that the inner side (81) has at least the same radius as the outer surfaces of the supporting feet (50).

10. Turbocharger bearing according to any one of claims 1 to 7, characterized in that the retaining ring (31) is secured against axial displacement in the ring chamber (68) by means of an additional ring (96), the retaining ring (31) being disposed axially between the additional ring (96) and a rear surface (69) of the ring chamber (68), preferably with axial clearance, and/or having clearance radially with respect to the inside surface of the ring chamber (68).

11. Turbocharger bearing according to any one of claims 1 to 7 and 10, characterized in that the retaining ring (31) has diametrically disposed outer portions (100, 101) whose outside diameter is greater than the inside diameter of the additional ring (96) and/or these outer portions (100, 101) extend in each case over an angle (101) which amounts to substantially 90°.

12. Turbocharger bearing according to any one of claims 1 to 7 and 10 and 11, characterized in that the retaining ring (31) is continuous over its circumference and can be inserted in the axial direction without deformation and/or with free play with respect to the inside wall of the ring chamber (68) which is open at the end of the bearing case and especially is made with a uniform diameter.

13. Turbocharger bearing according to any one of claims 1 to 7 and 10 to 12, characterized in that the retaining ring (31) has an installation cam (112) which engages in an opening in the additional ring (96), this opening being present between opposite free ends of the additional ring (96).

## Revendications

1. Palier de turbocompresseur sur gaz d'échappement comprenant une fourrure (26) qui est disposée flottante dans un alésage (18) d'un carter (6) de palier pour former le palier radial d'un arbre (14), et qui est immobilisé contre la translation axiale, dans lequel le blocage en rotation est établi au moyen d'un élément disposé dans le carter (6) de palier, lequel élément est engagé, d'une part, dans une rainure (76) de la fourrure (28), d'autre part, dans un évidement (46) du carter (6) du palier,
***caractérisé en ce que***
l'élément est constitué par une bague d'arrêt (30, 31) disposée dans une chambre annulaire (68) du carter (6) du palier,
en ce que la bague d'arrêt (30, 31) présente une languette (48) qui s'engage dans un évidement (46) du carter (6) du palier qui fait suite à la chambre annulaire,
en ce que la bague d'arrêt (30, 31) présente au moins une moulure (54, 56) orientée vers la surface frontale (74) de la fourrure (26),
et en ce que la surface extérieure (70, 72) de la moulure (54, 56) est appuyée contre au moins une surface de la rainure (76) de la fourrure (26).

2. Palier de turbocompresseur sur gaz d'échappement selon la Revendication 1, ***caractérisé en ce que*** la moulure (54, 56) et la rainure (76) présentent sensiblement un contour en forme de V et/ou s'étendent dans une direction radiale.

3. Palier de turbocompresseur sur gaz d'échappement selon la Revendication 1 ou 2, ***caractérisé en ce que*** la bague d'arrêt (30, 31) présente deux moulures oppposées (54, 56), deux rainures opposées (76) étant de même disposées de façon correspondante dans la surface frontale (74) de la fourrure (26).

4. Palier de turbocompresseur sur gaz d'échappement selon une des Revendications 1 à 3, ***caractérisé en ce que*** la moulure (54, 56) et la rainure (76) sont disposées sensiblement dans un plan qui s'étend perpendiculairement au perçage (8) et/ou à ce que, dans cette construction, la languette (48) est disposée sensiblement dans le même plan axial que le perçage (8) précité.

5. Palier de turbocompresseur sur gaz d'échappement selon une des Revendications 1 à 4, ***caractérisé en ce que*** la languette (48) est en appui par une surface latérale (64, 66) contre une surface de contact (58, 60) de l'évidement (46), les surfaces précitées s'étendant de préférence dans la direction axiale et/ou étant de forme plane, et/ou en ce que la languette (48) est coudée d'un angle prédéterminé (78) par rapport aux autres parties de la bague d'arrêt (30, 31) en sens inverse de la moulure (54, 56).

6. Palier de turbocompresseur sur gaz d'échappement selon une des Revendications 1 à 5, ***caractérisé en ce qu'***une surface de fond (75) de l'évidement (48) est disposé sensiblement dans le même plan radial qu'une surface arrière (69) de la chambre annulaire (68).

7. Palier de turbocompresseur sur gaz d'échappement selon une des Revendications 1 à 6, ***caractérisé en ce que*** la bague d'arrêt (30, 31) présente, radialement à l'extérieur, en direction de la moulure (54, 56), un évidement (86, 87) et/ou un évidement (88, 89) latéralement de chaque côté de la languette (48).

8. Palier de turbocompresseur sur gaz d'échappement selon une des Revendications 1 à 7, ***caractérisé en ce que*** la bague d'arrêt (30) disposée dans la chambre annulaire (68) constituée par une gorge annulaire, est symétrique par rapport à un plan médian (62) orienté de préférence verticalement, et deux parties terminales (52) espacées l'une de l'autre, présentant des perçages (82, 84) sont disposées verticalement vers le haut et la languette (48) est orientée vers le bas.

9. Palier de turbocompresseur sur gaz d'échappement selon une des Revendications 1 à 8, ***caractérisé en ce que*** la languette (48) est sensiblement en forme de U, pour donner un effet de ressort et/ou en ce que le côté intérieur (81) présente au moins le même rayon que les surfaces extérieures des parties d'appui (50).

10. Palier de turbocompresseur sur gaz d'échappement selon une des Revendications 1 à 7, ***caractérisé en ce que*** la bague d'arrêt (31) est immobilisée contre la translation axiale dans la chambre annulaire (68) au moyen d'une bague supplémentaire (96), la bague d'arrêt (31) étant interposée axialement entre la bague supplémentaire (96) et une surface arrière (69) de la chambre annulaire (68), de préférence avec jeu axial et/ou présente un jeu radial par rapport à la surface extérieure de la chambre annulaire (68).

11. Palier de turbocompresseur sur gaz d'échappement selon une des Revendications 1 à 7, 10, ***caractérisé en ce que*** la bague d'arrêt (31) présente des régions extérieures (100, 101) disposées diamétralement, dont le diamètre extérieur est plus grand que la diamètre intérieur de la bague supplémentaire (96) et/ou ces régions extérieures (100, 101) s'étendent chacune sur un angle (101) qui est sensiblement de 90°.

12. Palier de turbocompresseur sur gaz d'échappement selon une des Revendications 1 à 7, 10, 11, ***caractérisé en ce que*** la bague d'arrêt (31) est de configuration fermée sur sa périphérie et peut être engagée dans la direction axiale sans déformation et/ou avec jeu par rapport à la paroi intérieure de la chambre annulaire (68), laquelle est ouverte vers l'extrémité du carter de palier et, notamment, d'une constitution à diamètre constant.

13. Palier de turbocompresseur sur gaz d'échappement selon une des Revendications 1 à 7, 10 à 12, ***caractérisé en ce que*** la bague (31) présente une patte de montage (108) qui est engagée dans une ouverture de la bague supplémentaire (96), cette ouverture étant située entre les extrémités libres opposées de la bague supplémentaire (96).
